# EUROPEAN PATENT APPLICATION

(11) **EP 1 936 966 A2**
(43) Date of publication of application: **25.06.2008**
(21) Application number: 07254805.0
(22) Date of filing: 12.12.2007
(51) Int. Cl.: H04N 5/445

(54) **Broadcast receiving apparatus**

(30) Priority: 18.12.2006 JP 2006339905
(71) Applicant: Hitachi, Ltd., Chiyoda-ku Tokyo 100-8280 (JP)
(72) Inventor: Kaneko, Minoru c/o Hitachi Ltd., 6-1 Marunouchi 1-chome, Chiyoda-ku, Tokyo 100-8220 (JP); Yamashita, Tomochika c/o Hitachi Ltd., 6-1 Marunouchi 1-chome, Chiyoda-ku, Tokyo 100-8220 (JP)
(74) Representative: Calderbank, Thomas Roger

(57) **Abstract**

The present invention provides a broadcast receiving apparatus capable of allowing the user to check other available programs while viewing a certain program without switching the channel.

This broadcast receiving apparatus is configured so that if such an off-screen program is selected, program information concerning the selected off-screen program is displayed in the [off-screen program check] OSD without occupying the currently viewed broadcast program and, asynchronously with this program information, broadcast video information concerning the selected off-screen program is rendered in an internal thumbnail window thereof.

## Description

The present invention relates to a broadcast receiving apparatus which receives television broadcasts (mainly digital broadcasts) transmitted via satellites or cables or terrestrially.

One of the known conventional broadcast receiving apparatus is disclosed in JP-A-9-270673. A broadcast receiving apparatus described in JP-A-9-270673 comprises means for superimposing a list of available off-screen programs on a currently viewed certain program, means for displaying text information concerning a plurality of off-screen programs in the off-screen program list, means for scrolling the displayed off-screen program list, and means which if one of the indicated plural off-screen programs is selected, turns off the off-screen program list, tunes in the channel carrying the selected off-screen program and renders the program.

In the above-cited JP-A-9-270673, however, sufficient consideration is not given to how to display program information about the selected off-screen program and render the selected off-screen program in thumbnail format in an off-screen program check OSD without occupying the currently viewed broadcast program.

In view of this problem, it is a preferred aim of the present invention to provide a broadcast receiving apparatus which may allow checking of off-screen programs without switching from the current channel to interrupt the currently viewed program.

To attain the object, a broadcast receiving apparatus of the present invention is configured so that if an off-screen program is selected, program information concerning the selected off-screen program appears (is displayed) in the off-screen program check OSD and broadcast video information concerning the selected off-screen program is rendered in thumbnail format (window) within the off-screen program check OSD asynchronously with the program information.

In addition, the broadcast receiving apparatus of the present invention may be configured so that the broadcast video information rendered in the thumbnail format (window) is recorded in a storage unit.

In addition, the broadcast receiving apparatus of the present invention may be configured so that the broadcast video information rendered in the thumbnail format (window) is obtained from the storage unit if the broadcast video information has already been recorded in the storage unit.

In addition, the broadcast receiving apparatus of the present invention may be such that program information displayed in the off-screen program check OSD includes network name, channel number, broadcast time period (currently viewed) and description of broadcast content (program title only).

In addition, the broadcast receiving apparatus of the present invention may be such that off-screen program select buttons provided on a remote control unit are operated to select a network and a channel within the network and, if a new channel is selected by operating the select buttons while the program information is displayed in the off-screen program check OSD, this program information is replaced by the program information concerning the newly selected channel.

In addition, the broadcast receiving apparatus of the present invention may be such that the remote control unit is provided with an off-screen program check button to activate the off-screen check OSD.

Thus, according to the present invention, it is possible to simply and quickly check the currently broadcast off-screen programs in the off-screen program check OSD without occupying the currently viewed broadcast program.

### In the Drawings

FIG. 1 schematically shows the configuration of a broadcast receiving apparatus embodiment of the present invention.
FIG. 2 shows a default state of an [off-screen program check] OSD on the display screen of a broadcast receiving apparatus embodiment of the present invention after [off-screen program check] is activated, wherein the [off-screen program check] OSD does not occupy the currently viewed program.
FIG. 3 shows video information (TS packets) to render an off-screen program in a thumbnail window according to the present invention.
FIG. 4 is a process flowchart of a first embodiment for [off-screen program check] in a broadcast receiving apparatus according to the present invention.
FIGS. 5A to 5C show how the [off-screen program check] OSD changes in a broadcast receiving apparatus embodiment of the present invention without occupying the currently viewed program after [off-screen program check] is activated. If another off-screen program is selected while the [off-screen program check] OSD is in a default state, program information concerning the selected off-screen program is displayed and then broadcast video information concerning the selected off-screen program is rendered in a thumbnail window.
FIG. 6 is a process flowchart of a second embodiment for [off-screen program check] in a broadcast receiving apparatus according to the present invention.

Embodiments for implementing a broadcast receiving apparatus according to the present invention will be described with reference to the drawings.

### [First Embodiment]

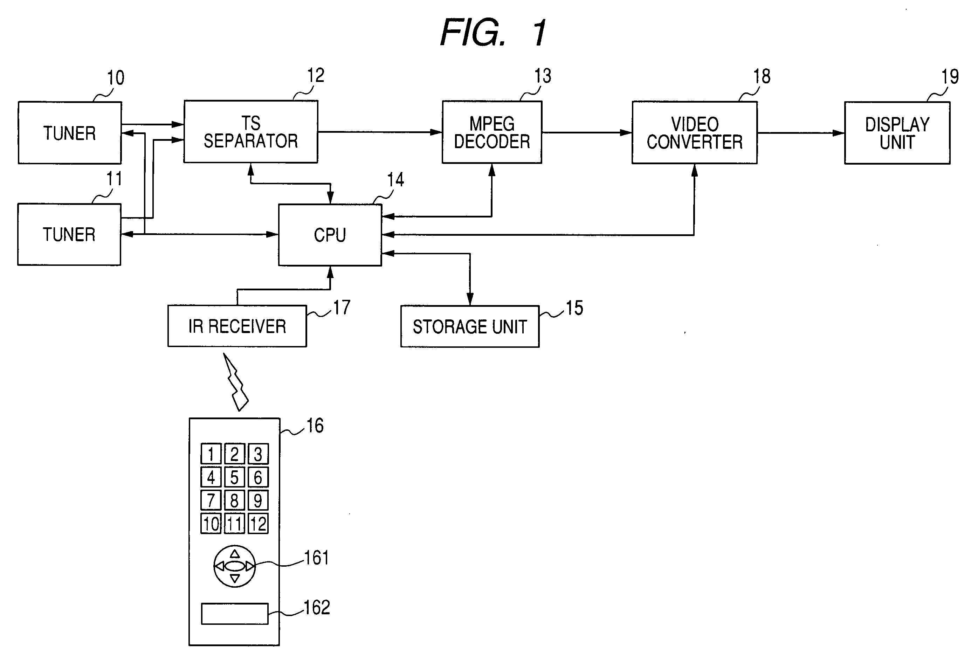

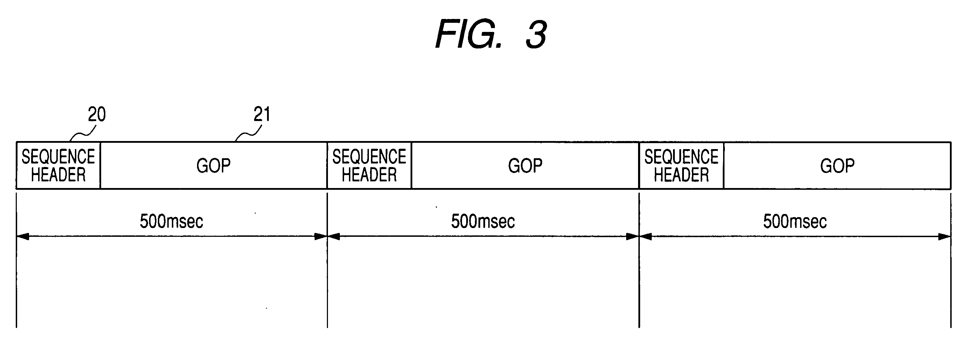

At first, the following describes a first broadcast receiving apparatus embodiment of the present invention with reference to FIGS. 1 through 5.

FIG. 1 schematically shows the configuration of the broadcast receiving apparatus embodiment of the present invention. Reference numerals 10 and 11 denote tuner units capable of tuning in an on-screen program broadcast and an off-screen program broadcast respectively and concurrently. Specifically, the tuner unit 10 tunes in an on-screen program broadcast while the tuner unit 11 tunes in an off-screen program broadcast. For example, the tuner unit 11 receives digital broadcast signals from digital broadcast sources at broadcast stations not shown in the figure via satellite, terrestrial, cable and other broadcast transmission networks. A channel is designated via a user interface, such as a remote controller, and a control unit (CPU) 14. After tuning in to and detecting the frequency of the designated channel, the tuner unit 11 performs digital demodulation and forward error correction (FEC) processing on the signal and outputs a digital signal (for example, in MPEG2-TS) to a TS (Transport Stream) separator 12. From the signals (plural transport packets of the respective designated channels) of the on-screen and off-screen broadcast programs which are respectively output by the tuner units 10 and 11, the TS (Transport Stream) separator (demultiplexer) 12 extracts (separates) video signals (video PES (Packetized Elementary Stream) or ES (Elementary Stream), audio signals (audio PES or ES) and program information. The program information extracted by the TS separator 12 is stored in a storage unit 15 by the controller (CPU) 14. The video signals (video PES or ES) and audio signals (audio PES or ES) extracted by the TS separator 12 are decoded by a decoder (for example, MPEG decoder) 13. The controller (CPU) 14 functions to control the individual components of the apparatus and perform information processing to facilitate the user to select a program or channel. The storage unit 15 is a unit to temporally store information. A remote controller 16 is provided with select buttons 161 and an off-screen program check button 162. The select buttons 161 allow the user to select either BS (Broadcast Satellite) digital broadcast, terrestrial digital broadcast or CS (Communication Satellite) digital broadcast by pushing the upper and lower buttons and select a channel by pushing the left and right buttons. An IR (Infrared) receiver (remote control reception unit) 17 receives and decodes the remote control signal and sends it to the controller 14. The video signal of the on-screen program, decoded by the MPEG decoder 13, is converted by an video converter 18 for display in a region 2. The video converter 18 also generates an off-screen program check OSD (On Screen Display) 4 based on the off-screen program information obtained from the controller (CPU). In addition, the video signal of the off-screen program, decoded by the MPEG decoder 13, is converted by the video converter 18 for display in a thumbnail window 3 within the off-screen program check OSD 4. A display unit 19 is a CRT, liquid crystal panel or PDP and is provided with speakers.

Note that program information is data including description of the content of the pertinent broadcast program and such accompanying information as the broadcast time. This information, multiplexed on the broadcast signal, is received, separated and stored in the storage unit 15. Program information, which is to be stored in the storage unit 15, may also be obtained by using another broadcast or communication service separately from the program broadcast.

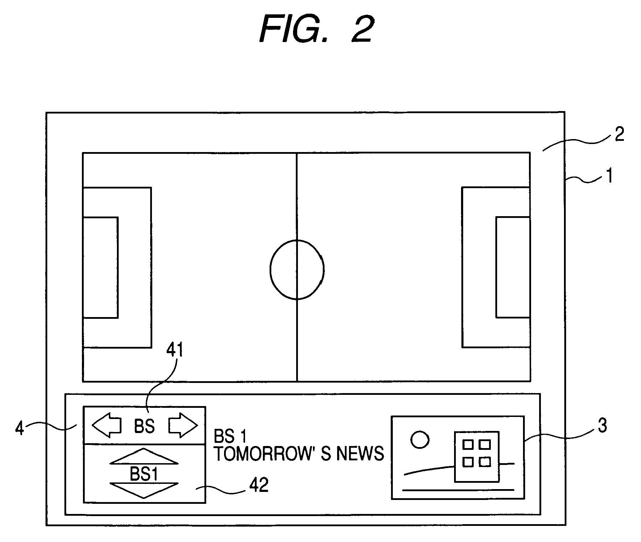

Thus, since the present embodiment is configured to have a plurality of tuners, the controller (CPU) 14 can control the apparatus as shown in FIG. 2. More specifically if an off-screen channel is designated by pressing buttons on the remote controller 16, information about the off-screen program (text or graphic information such as the network name (BS digital broadcast, terrestrial digital broadcast, CS digital broadcast or the like)/channel number/broadcaster's logo/broadcast period (currently viewed)/broadcast content) is immediately displayed from the storage unit 15 and, at least 500 msec after the off-screen program selected by the off-screen program check, the broadcast off-screen program asynchronously begins to be rendered in the thumbnail window 3. Note that FIG. 2 shows a default state of the [off-screen program check] OSD activated (on the currently viewed program).

The vertical dimension of the off-screen program check OSD 4 is designed to be not larger than about 25% of that of the display screen so as not to substantially hinder (or occupy) the currently viewed program. Accordingly, the off-screen program check OSD 4 does not display more than a program title as the description of the broadcast content. In addition to the program title, it may also be possible to display more (program category, performers, outline, etc.) to describe the content of the program as long as the vertical dimension of the off-screen program check OSD 4 does not exceed the aforementioned limit. Further, it is possible to raise the visibility of the currently viewed program by making the off-screen program check OSD 4 translucent so that the part of the currently viewed program overlaid by the off-screen program check OSD 4 can be seen through it.

Video information (TS packets) used for rendering in the thumbnail window 3 is composed in groups (500 msec per group) each having a sequence header 20 and a GOP (Group of Pictures). Therefore, obtaining video information for rendering in the thumbnail window 3 requires a maximum of 500 msec. The GOP 21 is the basic unit of video data in motion video encoding. For example, each GOP is composed of pictures (15 pictures or so) required to render a 0.5 sec motion video sequence. As well, each group is headed by one I (Intra) picture. This makes it possible to start rendering of the stream in the thumbnail window from an arbitrary GOP 21. In addition, each GOP is directly preceded by a sequence header 20, making it possible to determine from which video data to start rendering based on such sequence headers.

Thus, the present embodiment is characterized in that the off-screen program can be checked simply and quickly since upon designation of a channel, program information (text or graphic information) about the off-screen program available on the channel is displayed in the lower off-screen program check OSD without occupying the currently viewed program and then, asynchronously with the program information, broadcast video information about the off-screen program (video information concerning the off-screen program) is rendered in the thumbnail window within the off-screen program check OSD.

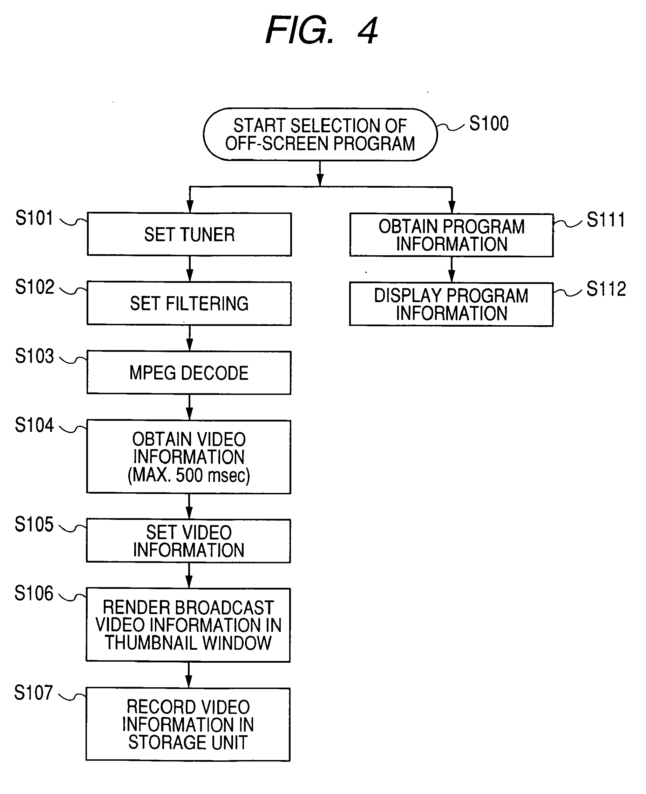

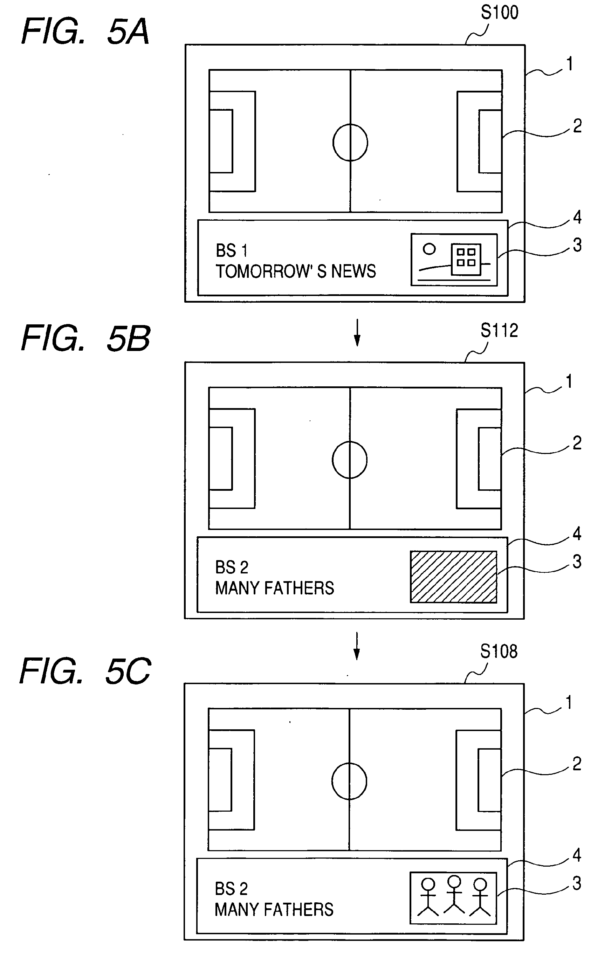

With reference to FIG. 4, the following provides a description of how control is performed in the present broadcast receiving apparatus embodiment. That is, if a channel is designated by operating buttons, program information (text or graphic information) about the off-screen program available on the designated channel is immediately displayed in the lower off-screen program check OSD without occupying the currently viewed program, and then asynchronously that broadcast video information (video information concerning the off-screen program) of the off-screen program is rendered in the thumbnail window within the off-screen program check OSD. First of all, if the off-screen program check button 162 on the remote controller 16 is pushed, this signal, transmitted from the remote controller 16 to the IR receiver 17, enters the controller (CPU) 14 to activate the [off-screen program check] OSD 4 and initiate the off-screen program selection (designation) process (S100). During this activation, retuning, blanking and audio mute are not performed. By default, the currently viewed program continues to be rendered as shown in FIG. 2 and FIG. 5A regardless of the activation. If the off-screen program check button 162 or the return button (not shown in the figure) is pushed during the activation, cancellation occurs.

Then, if an off-screen program select button 161 is operated, this signal, transmitted from the remote controller 16 to the IR receiver 17, enters the controller (CPU) 14 to select (designate) the corresponding off-screen program. Note that the selected channel becomes the view channel if the "decision" operation is done on the remote controller 16. This does not turn off the [off-screen program check] OSD 4. The currently viewed program cannot be re-selected as the view program. The [off-screen program check] OSD 4 will be turned off if the user does not perform any operation for a timeout period of 3 minutes after the off-screen program check button 162 is pushed.

The last selected channel number is not stored in the memory. During activation of this OSD, the currently viewed program continues to be rendered. If no initial scan is performed for terrestrial digital broadcasts, they will be skipped due to lack of program information when network switching is done. If "ch↑/↓" is pushed during activation of the off-screen program check, channel up/down occurs to switch the view program.

If a channel is defined as the one to be skipped by selecting [yes] in [menu/reception setting/terrestrial digital/CH skip], this channel cannot be selected. Titles obtained by scanning terrestrial digital broadcasts need not be retained when AC is turned off. If a selected channel is set as the view channel by the off-screen program check (by pressing the off-screen program check button 162), the off-screen program check is terminated.

The off-screen program check may be activated according to the following rules:
(1) The off-screen program check OSD is not activated while a data broadcast is used (message "no operation possible when data broadcast is used" is displayed), "maintenance mode" is displayed or "service adjustment screen" is displayed or while two programs are rendered on the display screen.
   Except for the above-mentioned cases, the off-screen program check can be activated according to the priority order although the priority is so low as to be equal to that given to TV menus and like.
(2) Activating any data broadcast is prohibited when the off-screen program check is active.
(3) If "return" is pushed or another user application is activated, the off-screen program check OSD is turned off.

As mentioned above, if the off-screen program check is activated to start selecting (designating) an off-screen program, the controller (CPU) 14 retrieves the program information (text or graphic information) concerning the selected (designated) off-screen program from the storage unit 15 where the information is stored (S111) and, via the video converter 18, immediately displays the retrieved off-screen program information in the lower [off-screen program check] OSD 4 without occupying the currently viewed broadcast program 2 (S112) as shown in FIG. 5B so that the information can quickly be checked.

The program information which is displayed in the lower [off-screen program check] OSD 4 may be text or graphic information such as the network name/channel number/broadcaster's logo/broadcast period (currently viewed)/broadcast content (only program title name).

While the [off-screen program check] OSD is on, the select button "cursor ←/→" 161 on the remote controller 16 is used to switch the network [terrestrial digital, BS, CS or other broadcast source]. As well, "cursor ↑/↓" is used to switch CH (channel) within each network and display program information concerning the designated channel.

This network/CH switching is performed while checking a network switching key 41 and a channel switching key 42 displayed within the off-screen program check OSD 4 as illustrated in FIG. 2. The network switching key 41 is an icon associated with "cursor ←/→" for switching the network to digital terrestrial broadcasts, BS broadcasts and the like. For example, as "cursor →" is pressed repeatedly, the network is switched in a predetermined order. In FIG. 2, BS is selected as the network.

The CH switching key 42 is an icon associated with "cursor ↑/↓" for switching CH within the network selected by the network switching key 41. For example, each time "cursor ↓" is pressed, the channel is switched to the next larger channel number. In FIG. 2, BS channel 1 is selected as the BS broadcast channel. This configuration facilitates selection of an off-screen program.

Note that in FIGS. 5A - 5C, illustration of the network switching key 41 and CH switching key 42 is omitted in order to simplify the description.

The default [network name] is the network which is currently viewed and switched in the following order:
[BS] ⇔ [Terrestrial Digital] ⇔ [CS] ⇔

The default [CH number] is the number of the channel which is currently viewed and switched in the same order as in [Program Table].

If another source is currently used, the default channel selected by the off-screen program check is as follows:
(1) When external input is viewed ... digital last ch
(2) When HDD is played ... digital last ch
(3) When terrestrial analog is viewed ... terrestrial digital last ch
(4) When initially activated in case (1), (2) or (3) after shipment... BS101ch

If the off-screen program check is activated to start selecting (designating) an off-screen program, the controller (CPU) 14 also performs steps S101 - S106 asynchronously with the program information acquiring step S111 and program information display step S112 in order to render the selected off-screen program in the internal thumbnail window 3 of the [off-screen program check] OSD 4. That is, rendering in the thumbnail motion video window 3 is started some time after the off-screen program information is displayed by the off-screen program check activated for off-screen program selection. To render an off-screen program in the thumbnail window concurrently with the currently viewed program 2, the apparatus need be provided with at least two tuners 10 and 11 as shown in FIG. 2. The following description is made on the assumption that the currently viewed program is received by the tuner 10 and an off-screen program is received by the tuner 11.

The following provides a brief description of how the currently viewed program is rendered in the screen 2. If a view channel is selected by operating keys on the remote controller 16, tuner setting is executed to the tuner unit 10 based on control from the controller (CPU) 14. After tuning in to and detecting the frequency of the designated channel, the tuner unit 10 performs digital demodulation and error correction processing on the signal and outputs a digital signal (for example, MPEG2-TS) to the TS (Transport Stream) separator 12. To the TS (Transport Stream) separator 12, TS filtering setting is executed according to the selected (designated) view program based on control from the controller (CPU) 14. Thus, the TS separator 12 extracts the video signal (video PES or ES) of the view channel from a plurality of transport packets which are output to the TS separator 12. The video signal of the view channel from the TS separator 12 is decoded by the decoder (for example, MPEG decoder) 13 to obtain the view program's video information. To the video converter 18, video information setting is executed according to the view program by the controller 14 so that the view program can be rendered in the view screen 2 of the display unit 19 as shown in FIG. 2.

Then, if an off-screen program is selected (designated) after the off-screen program check is activated, tuner setting is executed to the digital broadcast signal reception tuner unit 11 based on control from the controller (CPU) 14. After tuning in to and detecting the frequency of the designated channel, the tuner unit 11 performs digital demodulation and error correction processing on the signal and outputs a digital signal (for example, MPEG2-TS) to the TS (Transport Stream) separator 12 (S101). To the TS (Transport Stream) separator 12, TS filtering setting is executed according to the selected (designated) off-screen program based on control from the controller (CPU) 14. Thus, the TS separator 12 extracts the video signal (video PES or ES) of the off-screen program from a plurality of transport packets which are output to the TS separator 12 (S102).
The video signal of the off-program program from the TS separator 12 is decoded by the decoder (for example, MPEG decoder) 13 (S103), allowing the off-screen program's video information to be obtained in a maximum of 500 msec (S104). To the video converter 18, video information setting is performed according to the off-screen program by the controller 14 (S103). Consequently, the display unit 19 can start rendering the off-screen program in the internal thumbnail window 3 of the [off-screen program check OSD] 4 in 500 msec as shown in FIG. 5C (S106).

Video information (including sequence headers 20) rendered in the thumbnail window 3 is also recorded in the storage unit 15 (S107). If the central decision button surrounded by the select buttons 161 is pressed, the currently viewed program 2 is replaced by the off-screen program by making use of sequence headers 20 recorded in the storage unit 15. This turns off the off-screen program check screen OSD 4. Thus, since the off-program's video information (including sequence headers 20) is recorded in the storage unit 15, it is possible to quickly render the off-screen program on the main screen 2 when the off-screen program is selected as the view program.

Note that each selected channel's video information to be rendered in the thumbnail window 3 is subject to change due to new commercials, programs, etc. However, since each time the video information is changed, its changed video information in the sequence header is newly stored to update the video information in the sequence header recorded in the storage unit. Thus, the latest video information can always be provided on the thumbnail window 3.

Rendering in the thumbnail window 3 is possible either in 16:9 or 4:3 format depending on the broadcast source.

The thumbnail window 3 may be designed to operate as follows:
(1) The thumbnail window 3 begins to render an off-screen program in about 2 sec, longer than 500 msec, after the off-screen program is selected. This intends to give priority to speedy retrieval (check) of off-screen program information so as not to lower the speed by spending time for tune-in, etc.
(2) As shown in FIGS. 5A, 5B and 5C, a display area of the thumbnail window 3 is fixed. Even when no off-screen program is rendered, text is not arranged in the thumbnail window area.
(3) It is allowable that program information cannot be displayed due to the scan condition or the like before the program is render in the thumbnail window.
(4) If the source is letterboxed/sidepaneled, it is displayed in the thumbnail window in the same manner as when displayed alone. That is, if the source is sidepaneled (whether or not panned & scanned), the source is displayed as it is without removing the sidepanels. As well, if the source is letterboxed (panned & scanned), the upper and lower mattes are removed for conversion to 16:9.

The locations and dimensions of the 16:9 thumbnail window, 4:3 thumbnail window and OSD output area are: <16:9 thumbnail widow>(x, y, w, h) = (785, 444, 147, 86), <4:3 thumbnail window>(x, y, w, h) = (823, 444, 109, 86) and <OSD (On Screen Display) output area>(x, y, w, h) = (0, 437, 960, 103).

### [Second Embodiment]

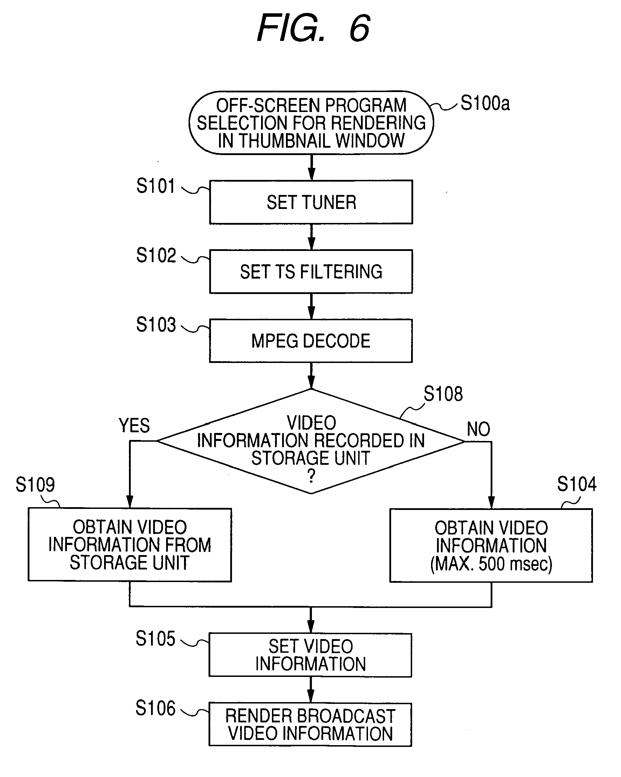

The following describes a second broadcast receiving apparatus embodiment of the present invention with reference to FIG. 6. The second broadcast receiving apparatus embodiment of the present invention is different from the first broadcast receiving apparatus embodiment in that the video information to render the off-screen program in the thumbnail window 3 is obtained as shown in FIG. 6. That is, FIG. 6 shows the flows of the process to obtain the video information for rendering the off-screen program in the thumbnail window 3. Step S100a initiates the process of rendering a selected off-program in the thumbnail window. The subsequent steps S101 through step S103 are same as those in FIG. 4. In the case of the second embodiment, while the off-screen program's video information is MPEG-decoded, the controller (CPU) 14 checks whether the off-screen program's video information was recorded in the storage unit 15 in step S107 shown in FIG. 4. If recorded, the video information to render the off-screen program in the thumbnail window is obtained from the corresponding group unit (GOP 21 preceded directly by a sequence header 20) recorded in the storage unit 15 (S109). If not, the video information to render the off-screen program in the thumbnail window is obtained (in a maximum of 500 msec) from a certain group unit (GOP 21 preceded directly by a sequence header 20) on the stream (S104). Then, the thus obtained video information is set in step 105 so as to be able to render broadcast video of the off-screen program in the thumbnail window 3 in step S106.

As described above, according to the second embodiment, it is not necessary to wait for a maximum of 500 msec to render a selected off-screen program in the thumbnail window if the selected program's video information has been recorded in the storage unit 15.

## Claims

1. A broadcast receiving apparatus which is configured so that a display screen displays program information concerning a selected off-screen program in an off-screen program check area thereof and, asynchronously with the program information, displays broadcast video information concerning the selected off-screen program in a thumbnail window within the off-screen program check area.

2. A broadcast receiving apparatus according to Clam 1 wherein the broadcast video information rendered in the thumbnail window is recorded in a storage unit.

3. A broadcast receiving apparatus according to Claim 2 wherein the broadcast video information rendered in the thumbnail window is retrieved from the storage unit if the broadcast video information has already been recorded in the storage unit.

4. A broadcast receiving apparatus according to Claim 1 wherein the program information displayed in the off-screen program check area includes network name, channel number, broadcast time period (currently viewed) and description of broadcast content.

5. A broadcast receiving apparatus according to Claim 1 wherein while the program information is displayed in the off-screen program check area, a network and a channel within the network are selected by operating off-screen program select buttons provided on a remote control unit thereof and the program information is replaced by the program information concerning the newly selected channel.

6. A broadcast receiving apparatus according to Claim 1 wherein a remote control unit thereof is provided with an off-screen program check button to activate the off-screen program check area.

7. A broadcast receiving apparatus according to Claim 4 wherein the description of the broadcast content is program title.

8. A broadcast receiving apparatus according to Claim 1 wherein if the broadcast video information rendered in the thumbnail window is changed, the broadcast video information recorded in a storage unit is updated according to the change of the broadcast video information.
